Europäisches Patentamt

European Patent Office

Office européen des brevets

(11) Veröffentlichungsnummer: **0 416 493 A2**

## (12) EUROPÄISCHE PATENTANMELDUNG

(21) Anmeldenummer: 90116837.7

(22) Anmeldetag: 03.09.90

(51) Int. Cl.5: **G01T 1/02**

(30) Priorität: 04.09.89 DE 3929294

(43) Veröffentlichungstag der Anmeldung:
**13.03.91 Patentblatt 91/11**

(84) Benannte Vertragsstaaten:
**AT BE CH DE FR GB IT LI LU NL**

(71) Anmelder: **Forschungszentrum Jülich GmbH**
**Postfach 1913, Wilhelm-Johnen-Strasse**
**W-5170 Jülich(DE)**

(72) Erfinder: **Büker, Harald, Dr.**
**Gelderner Strasse 23**
**W-5170 Jülich(DE)**
Erfinder: **Häsing, Friedrich-Wolfgang, Dr.**
**Merkatorstrasse 20**
**W-5170 Jülich(DE)**
Erfinder: **Nicolai, Stefan**
**Pfälzische Strasse 7**
**W-5170 Jülich(DE)**

(54) Verfahren, Sensor und Messeinrichtung zur Messung der Dosis von Kernstrahlung.

(57) Die Erfindung bezieht sich auf ein Verfahren zur Messung der Dosis von Kernstrahlung. Dieses Verfahren soll es ermöglichen, die Strahlendosis in situ und während der Bestrahlung in lebendem Gewebe zu messen. Dazu wird ein aus einem passiven Lichtwellenleiter bestehender Sensor an die zur Messung vorgesehene Stelle im Gewebe gebracht. Die Meßsignale vom Sensor werden mittels Übertragungs- Lichtwellenleiter einer Meß- bzw. Auswerteelektronik zugeführt, die diese on-line verarbeitet und die ermittelte Dosis unmittelbar zur Anzeige bringt. Das zur Abfrage des passiven Sensors erforderliche Licht wird dabei von einer Lichtquelle mittels Übertraguns-Lichtwellenleiter zum Sensor geleitet.

FIG. 1

# VERFAHREN, SENSOR UND MESSEINRICHTUNG ZUR MESSUNG DER DOSIS VON KERNSTRAHLUNG

Die Erfindung bezieht sich auf ein Verfahren zur Messung der Dosis von Kernstrahlung. Sie bezieht sich ferner auf einen Sensor mit einem passiven Lichtwellenleiter und eine Meßeinrichtung zur Bestimmung der Dosis von Kernstrahlung mit einem solchen Sensor, der über Übertragungs-Lichtwellenleiter mit einer Meß- bzw. Auswerteelektronik verbunden ist.

In der Strahlentherapie ist es erforderlich, an bestimmten Stellen im menschlichen oder tierischen Körper, beispielsweise zur Bekämpfung von Tumoren, eine bestimmte Strahlendosis applizieren zu können. Zwar kann die an der Stelle zur applizierende Strahlendosis im voraus rechnerisch ermittelt werden, jedoch ist es, was schon aus Gründen der Überwachung der Bestrahlung im Interesse von Patienten wünschenswert wäre, bisher nicht gelungen, die Strahlendosis während der Bestrahlung in situ zu messen.

Es ist daher Aufgabe der Erfindung, ein Verfahren zu schaffen, nach dem die Strahlendosis in situ und während der Bestrahlung in lebendem Gewebe meßbar ist. Es ist ferner Aufgabe der Erfindung, einen Sensor und eine Meßeinrichtung zur Durchführung des Verfahrens zu schaffen.

Die der Erfindung zugrundeliegende Aufgabe wird mit einem Verfahren gelöst, bei dem nach den Maßnahmen gemäß Anspruch 1 vorgegangen wird.

Das erfindungsgemäße Verfahren basiert auf der bekannten Einwirkung von Kernstrahlung auf Lichtwellenleiter.

Kernstrahlung erzeugt in Festkörpern, und damit auch in Lichtwellenleitern, Strukturfehler, z. B. Versetzungen von Gitteratomen, Austausch von Gitteratomen, Punkteffekte. Strukturdefekte werden nahezu ausschließlich durch Partikelstrahlung erzeugt. Änderungen der elektronischen Bänderstruktur durch Bindung von freien Elektronen oder Löchern an bereits vorhandenen Fehlstellen oder an durch die Kernstrahlung erzeugten Fehlstellen treten jedoch auch bei Gammastrahlung auf und führen zu erheblichen Änderungen der Dämpfung, des Brechungsindex oder zur Lumineszenz.

Der Lichtwellenleiter (LWL) des passiven (absorbierenden) Sensors emittiert selbst keine Lichtquanten infolge der Kernstrahlung. Seine Eignung als Sensor basiert vielmehr auf der in ihm infolge der Kernstrahlung bewirkten Änderung der Übertragungseigenschaften (Dämpfung) des LWL.

Durch entsprechende Dotierung des LWL kann der passive Sensor optimal dem nachzuweisenden Dosisbereich und der Strahlung angepaßt werden.

Im Unterschied zum LWL des Sensors wird der nur zur Übertragung von Licht vorgesehene Lichtwellenleiter als Übertragungs-Lichtwellenleiter, im folgenden als Ü-LWL bezeichnet.

Beim Einsatz des passiven Sensors wird die Dosis gemessen.

Der Sensor gemäß der Erfindung zeichnet sich dadurch aus, daß das eine Ende des Lichtwellenleiters verspiegelt ist und nur das andere Ende mit einem Ü-LWL verbindbar ist.

Ein sehr vorteilhafte Ausführungsart des Sensors besteht dabei darin, daß der Lichtwellenleiter (LWL) ebenso wie das dem anderen Ende des Lichtwellenleiters zugewandte Endstück des Übertragungslichtwellenleiters (Ü-LWL) sich jeweils fest in einer Metallkapillare befinden, daß beide einander zugewandten Enden geschliffen und poliert sind und stumpf aneinanderstoßend arretiert sind. Um zu dieser Ausführungsart des Sensors zu gelangen, wird beispielsweise der ungecoatete strahlenempfindliche Lichtwellenleiter, dessen Durchmesser ca. 120 $\mu$m beträgt, mit einem Kleber, der im Hinblick auf die medizinischen Anwendungen biokompatibel sein sollte, in einer Metallkapillare aus Reinnickel oder Neusilber (CuNi 80/20) mit einem Innendurchmesser von 150 $\mu$m und einem Außendurchmesser von 500 $\mu$m verklebt. Nach dem Aushärten des Klebers werden beide Endflächen geschliffen und poliert. Anschließend wird eine Endfläche verspiegelt.

Der strahlenunempfindliche Übertragungslichtwellenleiter (Durchmesser des Coatings 250 $\mu$m) wird in einer ca. 10 mm langen Kapillare mit einem Durchmesser von 300 $\mu$m bei ebenfalls 500 $\mu$m Außendurchmesser verklebt und ebenfalls geschliffen und poliert.

Bei der hier beschriebenen Kopplung des Lichtwellenleiters des Sensors und des Übertragungslichtwellenleiters entfallen die Schwierigkeiten, die sich beim Einsatz einer Steckverbindung bzw. bei Verschmelzen der beiden Faserenden der Lichtwellenleiter ergeben würden: Die Steckverbindung ist wegen der großen Abmessungen der Stecker (Durchmesser 7 - 10 mm) und der Baulänge der gesamten Steckverbindung von bis zu 100 mm für viele Anwendungsfälle im medizinischen Bereich ungeeignet. Beim Verschmelzen der beiden Glasfaserenden im Lichtbogen bei einer Temperatur von ca. 2000 °C (Splice-Verbindung) würde ein Lichtwellenleiter mit hohem Bleianteil (etwa 60 % PbO) bereits bei einer Temperatur von > 500 °C verbrennen, so daß eine Splice-Verbindung mit dem Übertragungslichtwellenleiter nicht möglich ist.

Da der Durchmesser des LWL sehr klein ist, er liegt bei 10 bis 200 $\mu$m, weist der Sensor - einschließlich der Führungshülse - einen Durchmesser von nicht mehr als 0,5 mm auf und kann daher für die Durchführung der Messung in einen bereits an die Stelle im lebenden Gewebe gebrachten, gewebeverträglichen Schlauchkanal eingeführt werden.

Der Sensor gemäß der Erfindung wird eingesetzt bei Bestrahlungen, bei denen es auf eine möglichst genaue Kenntnis der Ortsabhängigkeit der Strahleneinwirkung ankommt, bei denen daher eine Messung mit möglichst hoher Ortsauflösung gewünscht wird. Für einen passiven Sensor sind dann wegen ihrer hohen Empfindlichkeit z. B. bleihaltige LWL (Flintglasfaser) als LWL geeignet. Bei Anwendungen, bei denen längere Sensoren eingesetzt werden können, sind dagegen z. B. Ge-dotierte Glasfasern vorzuziehen.

Der Sensor ist über den Ü-LWL mit einer Meß- bzw. Auswerteelektronik verbunden. Diese ist so ausgelegt, daß sie die Meßsignale on-line aufnimmt und verarbeitet und die ermittelte Dosis unmittelbar zur Anzeige bringt, wobei auch die Lichtquelle, die das zur Abfrage des passiven Sensors erforderliche Licht erzeugt, über den Ü-LWL mit dem Sensor verbunden ist.

Der Sensor ist über einen Ü-LWL mit der Lichtquelle und über den anderen Ü-LWL mit der Auswerteelektronik verbunden. Das von der Lichtquelle kommende Licht wird über den Sensor zur Auswerteelektronik geleitet, wobei das Licht infolge der durch die Strahlung bewirkten Veränderung im Sensor eine zusätzliche Dämpfung erfährt, die von der Meß-bzw. Auswerteelektronik - ggf. in einer vergleichenden Referenzschaltung - bestimmt und angezeigt wird.

Bei der Meßeinrichtung gemäß der Erfindung steht der Ü-LWL über ein Kopplungsglied und weitere Ü-LWL mit der Lichtquelle und der Meßelektronik bzw. Auswerteelektronik in Verbindung, wobei der zwischen dem LWL des Sensors und dem Kopplungsglied befindliche Ü-LWL zugleich Hin- und Rückleiter für das Licht bzw. das Meßsignal ist.

Das in den passiven, am einen Ende verspiegelten Sensor eingespeiste und an der Spiegelfläche reflektierte Licht durchläuft den Sensor zweimal und erfährt dabei - im Vergleich zu einem in einer Ü-LWL-Schleife eingefügten Sensor - bei gleicher Länge des Sensors eine doppelte zusätzliche Dämpfung.

Eine weitere, vorteilhafte Ausführungsform der Meßeinrichtung weist die Merkmale des Anspruchs 8 auf. Bei dieser Ausführungsart der Meßeinrichtung werden die Wellenlängen des Lichts der beiden Dioden so gewählt, daß sie beide in den Bereich der (wellenlängenabhängigen) durch Strahleneinwirkung bewirkten Zusatzdämpfung fallen.

Eine weitere Ausführungsart der Meßeinrichtung weist die Merkmale des Anspruch 9 auf. Ein moduliertes Meßsignal ist dann ein Maß für die Strahleneinwirkung und damit für die Strahlendosis.

In der Zeichnung wird die Meßeinrichtung gemäß der Erfindung schematisch dargestellt und im folgenden näher erläutert:

Es zeigen

Figur 1 Meßeinrichtung mit zweiseitig an Ü-LWL angeschlossenem Sensor;

Figur 2 Meßeinrichtung mit verspiegeltem Sensor;

Figur 3 Darstellung des Dämpfungsverhaltens eines passiven Sensors und der Spektralverteilung der Strahlungsleistungen der Lichtquelle;

Figur 4 Darstellung der Strahlungsleistungen der Lichtquelle und an den Detektoren;

Figur 5 Darstellung der Art der Verbindung des Lichtwellenleiters und des Übertragungs-Lichtwellenleiters.

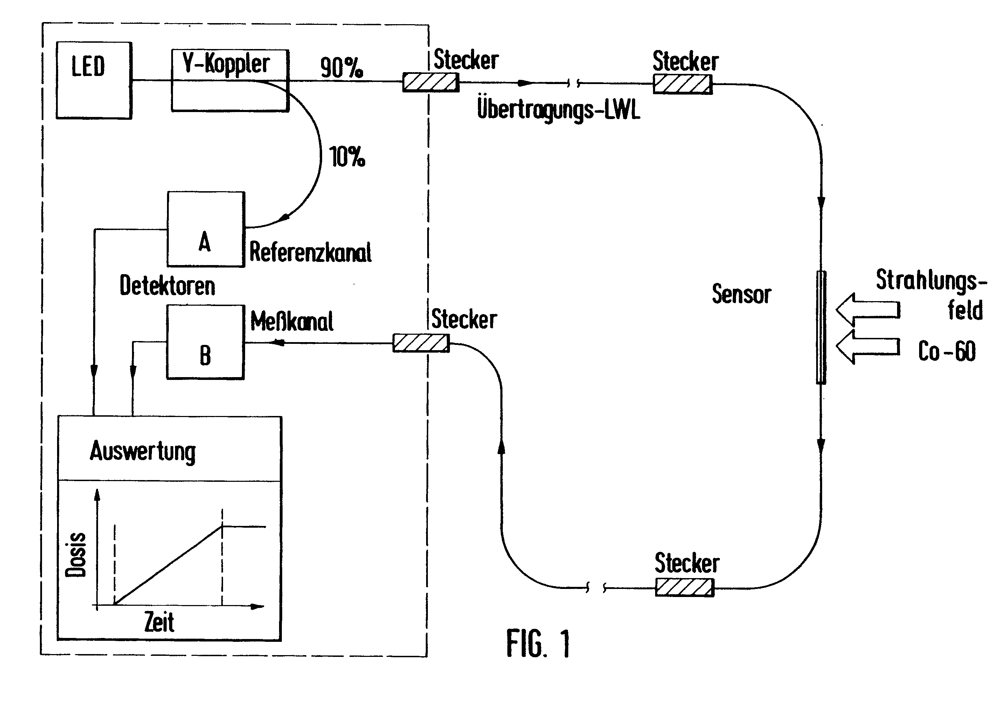

Figur 1 zeigt eine Meßeinrichtung, bei der zwei Ü-LWL zum Sensor benötigt werden.

Die Lichtquelle besteht aus der Lumineszenzdiode LED, die Licht einer Wellenlänge von 560 nm in einen Ü-LWL einkoppelt. Die Lichtleistung wird mit einem Y-Koppler in eine Referenzleistung (10 %), die dem Detektor A zugeführt wird, und eine Meßleistung (90 %) aufgeteilt, die über die strahlungsresistente Übertragungsstrecke und den strahlungsempfindlichen Sensor zu dem Detektor B gelangt. Die optische Dämpfung des Sensors (bleihaltiger LWL) wird durch Wechselwirkung mit der Kernstrahlung erhöht, so daß die im Sensor durch das Strahlungsfeld (bei der Versuchsreihe eine Co-Quelle) erzeugte Dosis als Abnahme der Lichtleistung am Detektor ermittelt werden kann. Die Lichtleistungen an den Detektoren A und B werden digitalisiert und als Dämpfungsänderung auf einem Bildschirm zur Anzeige gebracht.

Die Lichtquelle besteht in diesem Fall aus der Lumineszenzdiode LED und dem Y-Koppler, die Meß-bzw. Auswerteelektronik aus den Detektoren A und B und der speziellen Auswerteeinheit "Auswertung" mit Bildschirm.

Die Sensoren (Durchmesser 0,5 mm; Länge 40mm) wurden bis zu einer Gesamtdosis von etwa 60 Gy bestrahlt. Die Meßreihe zeigte keine signifikante Änderung der Nachweisempfindlichkeit über den gesamten Dosisbereich.

Die Nachweisempfindlichkeit wurde aus Kalibriermessungen im Wasserbad zu etwa $5 \times 10^{-3}$ Gy bei den oben genannten Sensormessungen ermittelt.

Als Reproduzierbarkeitstest wurde eine Versuchsserie mit 4 Sensoren gleicher Länge für einen Bestrahlungszyklus von 24 h und einer Einzeldosis von etwa 2 Gy unter den gleichen Versuchsbedingungen durchgeführt. Die maximale Abweichung zweier Messungen von sieben aufeinanderfolgenden Bestrahlungen desselben Sensors betrug 7,5 %. Die Nachweisempfindlichkeit der verschiedenen Sensoren zeigte Abweichungen von weniger als 15 %.

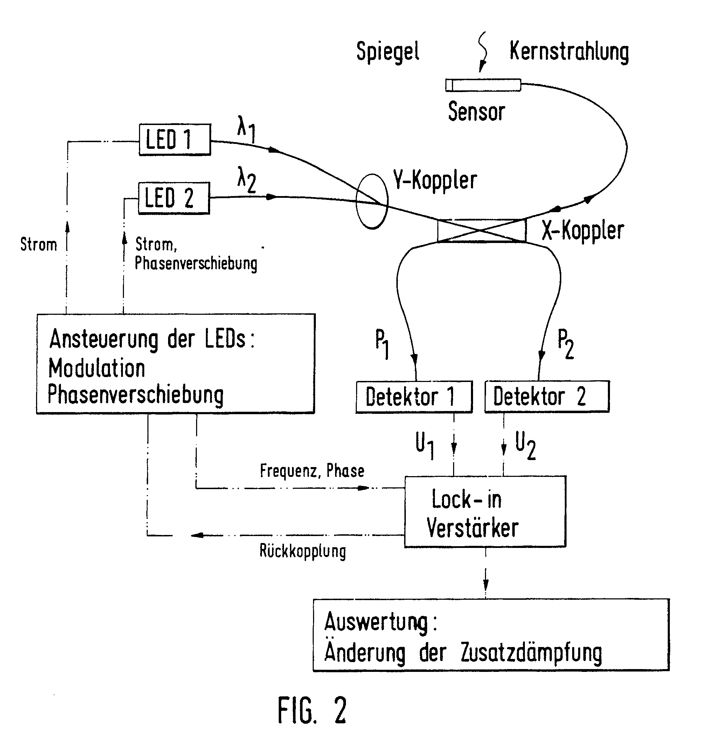

In Figur 2 ist eine Meßeinrichtung mit einem passiven Sensor dargestellt, dessen eines Ende verspiegelt ist und dessen anderes Ende an einen Ü-LWL angeschlossen ist.

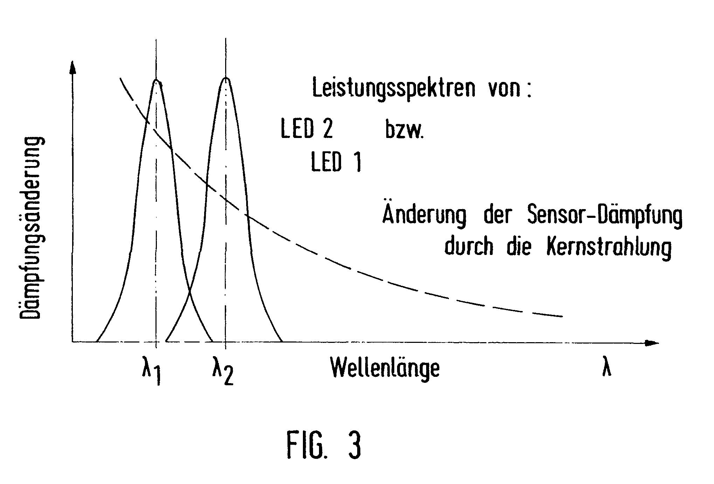

Bei der in Figur 2 dargestellten Meßeinrichtung wird außerdem davon Gebrauch gemacht, daß die Zusatzdämpfung pro absorbierter Strahlungsdosis eines LWL von der Wellenlänge abhängig ist, wie dies aus der schematischen Darstellung in Figur 3, die das Dämpfungsverhältnis eines Sensor-LWL und die spektrale Verteilung der Strahlungsleistungen zweier LED's wiedergibt, hervorgeht. Wird die Wellenlänge des Lichts der beiden LED's so ausgewählt, daß ihre Zentralwellenlänge $\eta$ 1 und $\eta$ 2 im Bereiche großer Gradienten des Dämpfungsspektrums liegen, ist das Verhältnis der Zusatzdämpfungen durch die des LWL des Sensors ein Maß für die vom LWL absorbierte Strahlendosis.

Wie aus Figur 2 hervorgeht, werden die in den Lumineszenzdioden LED 1 und LED 2 erzeugten Strahlungsleistungen mit den Wellenlängen $\eta$1 und $\eta$2 mittels eines Y-Kopplers zusammen in einen Ü-LWL eingekoppelt und mittels eines X-Kopplers in den Detektor 2 und damit in einen Referenzzweig sowie in den Detektor 1 und damit in den Meßzweig, der aus Sensor, X-Koppler und Detektor 1 einschließlich Ü-LWL besteht, aufgeteilt.

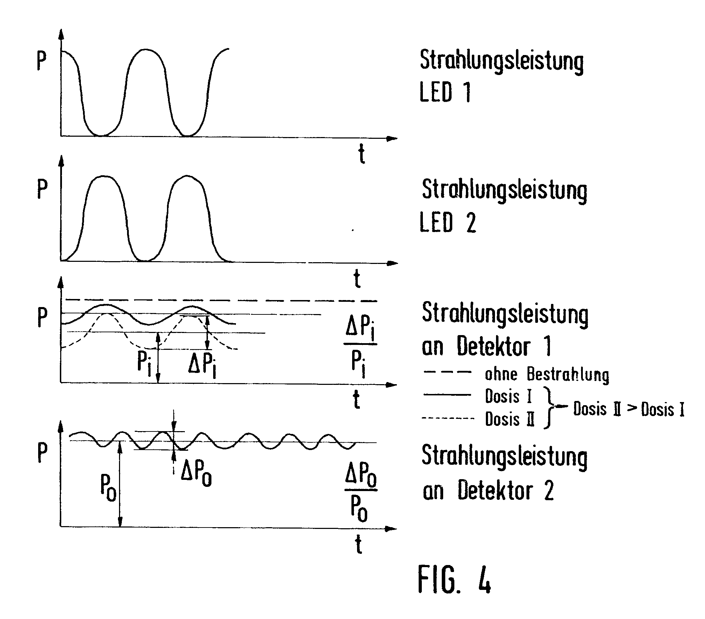

Das Licht beider LED's wird in der Einheit "Ansteuerung der LED's" amplitudenmoduliert und um 180° gegeneinander phasenverschoben. Das Amplitudenverhältnis beider Signale wird vor der Bestrahlung so eingestellt, daß am Detektor 1 nach Durchgang durch den Sensor ein nicht moduliertes Signal vorliegt. Der Referenzdetektor 2 dient dazu, das Verhältnis von Wechsel- ( $\Delta P_o$) und Gleichanteil des Meßsignals ($P_o$) durch Rückkopplung mit den LED's während der Messung konstant zu halten (Figur 4).

Ändert sich während der Bestrahlung das Dämpfungsverhalten für die Strahlungsleistungen P1 und P2 der LED's unterschiedlich, tritt auch am Detektor 1 ein moduliertes Signal auf, das ein Maß für die absorbierte Dosis ist. Durch Einsatz des lock-in-Verstärkers für die Detektoren 1 und 2 können kleine Änderungen der Strahlungsleistung auf einem hohen Gleichpegel gemessen werden, so daß auch sehr geringe Änderungen des Dämpfungsspektrums des Sensors bis zu einer Größenordnung von $10^{-3}$ dB nachgewiesen werden können.

Bei der beschriebenen Meßeinrichtung können bei geeigneter Wahl der beiden LED's die Querempfindlichkeiten durch andere Effekte (z. B. Druck, Steckerankopplung, Temperatur) minimiert werden.

In Figur 4 ist schematisch die Strahlungsleistung an den LED's und den Detektoren 1 und 2 dargestellt. Daraus geht hervor, daß vor der bzw. ohne Bestrahlung am Detektor 1 ein gleichbleibendes, nicht moduliertes Meßsignal entsteht, während bei der Bestrahlung die Amplitude des Wechselanteils ($\Delta Pi$) mit zunehmender Dosis ansteigt. Die mit dem Gleichanteil (Pi) normierten Amplitude des Wechselanteils wird zur Bestimmung der Dosis benutzt. Durch Kalibrierung wird die Empfindlichkeit jedes Sensors individuell ermittelt. Diese kann unmittelbar vor der Applikations des Sensors vom Anwender durchgeführt werden.

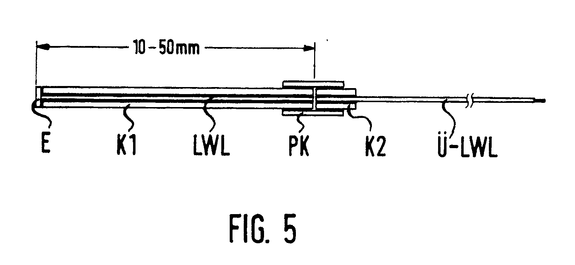

In Figur 5 ist die Art der Verbindung des strahlungsempfindlichen Lichtwellenleiters LWL des Sensors und des Übertragungs-Lichtwellenleiters Ü-LWL dargestellt.

Der LWL - eine Bleifaser - befindet sich in einer Metallkapillare K1 aus Reinnickel und ist darin mit einem biokompatiblen Kleber verklebt. Der Durchmesser des LWL beträgt ca. 120 $\mu m$, der Innendurchmesser der Metallkapillare etwa 150 $\mu m$. Der Außendurchmesser der Metallkapillare beträgt etwa 500 $\mu m$.

Das dem LWL zugewandte Ende des Ü-LWL - der Durchmesser des Coatings beträgt 250 $\mu m$ - steckt bzw. ist verklebt in einer ca. 10 mm lange Kapillare K2 mit einem Innendurchmesser von 300 $\mu m$ bei ebenfalls 500 $\mu m$ Außendurchmesser.

Die beiden einander zugewandten Enden des LWL und des Ü-LWL sind geschliffen und poliert. Sie stoßen - ohne daß weitere Verbindungsmaterialien eingesetzt worden wären - stumpf aufeinander und sind mittels einer metallischen Positionskapillare PK arretiert.

Die dem Ü-LWL abgewandte Endfläche E des Sensors ist verspiegelt.

## Ansprüche

1. Verfahren zur Messung der Dosis von Kernstrahlung mittels eines aus einem passiven (absorbierenden) Lichtwellenleiter (LWL) bestehender Sensors, bei dem die Meßsignale vom Sensor mittels Übertragungs-Lichtwellenleiter (Ü-LWL) einer Meß- bzw. Auswerteelektronik zugeführt werden, die diese on-line verarbeitet und die ermittelte Dosis unmittelbar zur Anzeige bringt, wobei das zu seiner Abfrage erforderliche Licht von einer Lichtquelle mittels Übertragungs-Lichtwellenleiter (Ü-LWL) zum Sensor geleitet wird, **dadurch gekennzeichnet,** daß zur Durchführung der Messung einer lokalen Einwirkung der Kernstrahlung an einer vorgegebenen Stelle in lebendem Gewebe der Sensor, dessen Lichtwellenleiter (LWL) eine Länge von 10 bis 50 mm aufweist an die Stelle gebracht wird.

2. Verfahren nach Anspruch 1, **dadurch gekennzeichnet,** daß der einen Durchmesser von nicht mehr als 0,5 mm aufweisende Sensor für die Durchführung der Messung in einen bereits an die Stelle gebrachten, gewebeverträglichen Schlauchkanal eingeführt wird.

3. Sensor für eine Meßeinrichtung zur Bestimmung der Dosis von Kernstrahlung, der einen passiven Lichtwellenleiter (LWL) aufweist und über Übertragungs-Lichtwellenleiter (Ü-LWL) mit einer Meß- bzw. Auswerteelektronik verbunden ist,
**dadurch gekennzeichnet,**
daß das eine Ende des Lichtwellenleiters (LWL) des Sensors verspiegelt ist und nur das andere Ende des Lichtwellenleiters mit einem Übertragungs-Lichtwellenleiter (Ü-LWL) verbindbar ist.

4. Sensor nach Anspruch 3,
**dadurch gekennzeichnet,**
daß sich der Lichtwellenleiter (LWL) ebenso wie das dem anderen Ende des Lichtwellenleiters zugewandte Endstück des Übertragungslichtwellenleiters (Ü-LWL) jeweils fest in einer Metallkapillare befinden, daß beide einander zugewandten Enden geschliffen und poliert sind und stumpf aneinanderstoßend arretiert sind.

5. Sensor nach Anspruch 4,
**dadurch gekennzeichnet,**
daß die beiden stumpf aneinanderstoßenden Enden durch eine Positionskapillare (PK) arretiert sind.

6. Sensor nach Anspruch 4 oder 5,
**dadurch gekennzeichnet,**
daß der Durchmesser des Sensors nicht mehr als 0,5 mm beträgt.

7. Meßeinrichtung zur Bestimmung der Dosis von Kernstrahlung mit einem, einen passiven Lichtwellenleiter (LWL) aufweisenden Sensor, der über Übertragungs-Lichtwellenleiter (Ü-LWL) mit einer Meß- bzw. Auswerteelektronik verbunden ist,
**dadurch gekennzeichnet,**
daß der Übertragungs-Lichtwellenleiter (Ü-LWL) über ein Kopplungsglied (Y-Koppler) und weitere Übertragungs-Lichtwellenleiter (Ü-LWL) mit der Lichtquelle und der Meßelektronik bzw. Auswerteelektronik in Verbindung steht, wobei der zwischen dem Lichtwellenleiter (LWL) des Sensors und dem Kopplungsglied befindliche Übertragungs-Lichtwellenleiter zugleich Hin- und Rückleiter für das Licht bzw. das Meßsignal ist.

8. Meßeinrichtung nach Anspruch 7,
**dadurch gekennzeichnet,**
daß die Lichtquelle aus zwei Lumineszenzdioden (LED1 und LED2) besteht, von denen jede ein Licht derart verschiedener Wellenlänge ($\eta$1 bzw. $\eta$2) erzeugt, daß sich das Licht der einen Diode von dem Licht der anderen Diode in der von der einwirkenden Kernstrahlung bewirkten Intensitätsänderung möglichst stark und in der von Einflüssen im Bereich der Übertragungs-Lichtwellenleiter (Ü-LWL) bewirkten Intensitätsänderung möglichst wenig unterscheidet und daß die Meß- und Auswerteelektronik so ausgelegt ist, daß sie die Dosis durch Vergleich des Lichts beider Wellenlängen ermittelt.

9. Meßeinrichtung nach Anspruch 8,
**dadurch gekennzeichnet,**
daß das Licht der beiden Lumineszenzdioden (LED1 und LED2) amplitudenmoduliert ist in der Weise, daß die Modulation bei beiden Dioden gegeneinander um 180$^\circ$ phasenverschoben ist und daß das Amplitudenverhältnis des Lichts der beiden Dioden vor Beginn der Strahlung so eingestellt ist, daß an der Auswerteelektronik ein nicht moduliertes Meßsignal ansteht.

FIG. 1

EP 0 416 493 A2

FIG. 2

FIG. 3

EP 0 416 493 A2

Strahlungsleistung LED 1

Strahlungsleistung LED 2

Strahlungsleistung an Detektor 1

$\dfrac{\Delta P_i}{P_i}$

– – – ohne Bestrahlung

——— Dosis I
-------- Dosis II  }— Dosis II > Dosis I

Strahlungsleistung an Detektor 2

$\dfrac{\Delta P_0}{P_0}$

FIG. 4

EP 0 416 493 A2

FIG. 5